(19) Europäisches Patentamt
European Patent Office
Office européen des brevets

(11) **EP 1 928 069 A1**

(12) **EUROPEAN PATENT APPLICATION**

(43) Date of publication:
**04.06.2008 Bulletin 2008/23**

(51) Int Cl.:
*H02J 3/18* (2006.01)

(21) Application number: **06405501.5**

(22) Date of filing: **30.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ABB RESEARCH LTD.**
**8050 Zürich (CH)**

(72) Inventors:
• **Oudalov, Alexander**
**5442 Fislisbach (CH)**
• **Tepper, Jens**
**5406 Rütihof (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Device and method for controlling power flow in a power network**

(57)     For controlling power flow in meshed power network (30), at least one variable resistance module (11) is inserted into a transmission line (3) of the power network (30). In an external driver (13) an external control effort (14) is produced and applied to the variable resistance module (11) for causing a change of its resistance. For example, a High Temperature Superconductor module or a Liquid Metal Current Limiter module is used as the variable resistance module (11). Accordingly, a heater or a magnetic field inductor is used as a driver (13) for causing a change of resistance of the variable resistance module (11). Using a variable resistance module (11) makes it possible to control power flow in a power network (30) with less wear of components than in conventional electro-mechanical switching compensation and with lower costs than with flexible AC transmission systems devices.

Fig. 1

EP 1 928 069 A1

**Description**

FIELD OF THE INVENTION

The present invention relates to a device and a method for controlling power flow in a power network. Specifically, the invention relates to a device and a method for controlling power flow in a transmission line of a meshed power network.

BACKGROUND OF THE INVENTION

While profound changes sweep the electric utility industry, the likelihood of power transactions is expected to increase. Potentially, this leads to considerable redistribution of existing power flows and to occurrence of heavy loaded corridors in transmission networks because existing networks were not designed to meet the needs of transaction-oriented markets. Furthermore, transmission companies will face serious problems, because, for a variety of environmental and political reasons, it has become almost impossible to build new high voltage transmission lines. Therefore, transmission networks operate close to their limits. This stress can be reduced with a more effective utilization of existing transmission network capacity using power flow control. Therefore, a network based control for redirection and uniform redistribution of power flows in the transmission system, without rescheduling or topological changes, has become a very important instrument in the hands of independent system operators.

A fundamental characteristic of electric power systems is the difficulty to control a power flow along a specific "contract path". In the absence of any active control elements, the corresponding sources and loads determine active and reactive power flow through each single transmission line. It can occur that "loop flows" may take power far away from the most direct route from a generator to a load centre and affect all interconnected undertakings, even though they are not parties to an intended transaction. For example, a significant portion of power scheduled from the Netherlands to Austria flows via the French, Swiss and Italian transmission networks, because of the availability of a large number of low impedance transmission lines along that loop. In such circumstances, certain lines may carry an overload where others are still insufficiently loaded. In this case it is desirable, to actively influence the power flow distribution in the network.

For any transmission line, three key parameters determine an active power flow (P): terminal bus voltages (U), relative phase angle (Δ) between the sending and receiving ends, and line impedance (X).

On one hand, voltage magnitudes cannot be varied significantly since they must be kept within regulated limits providing limited scope for power flow control. On the other hand, a voltage angle difference is not limited as heavily to such restrictions and provides a practical option for power flow control. Alternatively, a variation of the "electric length" of the transmission line is achieved by connecting in series to the line a continuously adjustable impedance (e.g. a series capacitor or reactance).

To modify a phase angle difference or line impedance, a variety of electro-mechanically switched compensation devices with limited commutation capabilities (1-2 times per day) are generally used, e.g. a phase-shifting transformer (PST) and solutions based on series compensation (i.e. control of series capacitance and/or inductance). However, modem power systems require more frequent switching of compensation devices, e.g. 10-20 times per day, owing to more frequent and sometimes unpredictable variations of power system parameters. However, this increases costs and complexity of electro-mechanically controlled compensation devices.

Due to the rapid development of power electronics in the last two decades, a new family of devices, so called Flexible AC Transmission Systems (FACTS), are becoming available. FACTS devices are based on power electronics semiconductor components (operated by way of drivers on line potential producing internal control signals) and do not rely on mechanical switches for their main function, to enable a fast, continuous response time in the millisecond range. However, power electronics components (e.g. thyristors, transistors, diodes, etc.) are costly, thus making FACTS devices expensive. Consequently, when compared to more than 250 mechanically switched series compensation devices in operation, only a few thyristor controlled series compensation devices are installed worldwide.

Conventional methods of controlling power flow, relying on electro-mechanical and thyristor switches, do not have unlimited commutation capabilities, maintenance free operation or simultaneous fault current limitation, and the required devices often cannot be manufactured at low cost.

DESCRIPTION OF THE INVENTION

It is therefore an objective of the present invention to provide an alternative device and method for controlling power flow in a power network, which device and method are not as costly as FACTS devices but show less wear than components used in conventional electro-mechanical switching compensation.

This objective is achieved by a device according to claim 1 and a method of controlling power flow according to claim 6. Further preferred embodiments are evident from the dependent claims.

According to the present invention, the above-mentioned objects are particularly achieved in that, for controlling power flow in a meshed power network, at least one variable resistance module is inserted into a transmission line of the power network. In an external driver, galvanically separated from the variable resistance module which in turn is on line potential, an external control effort is produced and applied to the variable resistance module for causing a change of resistance of the variable resistance module.

Preferably, a High Temperature Superconductor module is used as the variable resistance module. Accordingly, a heater or a magnetic field inductor is used as a driver for causing a change of resistance of the variable resistance module. In other words, the driver uses a heater and/or a magnetic field inductor for moving operating characteristics of the High Temperature Superconductor module by a magnetic field or heat, respectively, from short circuit current to nominal current range, and for causing a change of resistance of the High Temperature Superconductor module.

Alternatively, the driver uses a magnetic field inductor for moving, by means of a magnetic field, operating characteristics of a Liquid Metal Current Limiter module from fault current to nominal current range, and for causing a change of resistance of the Liquid Metal Current Limiter module.

Alternatively, a resistor having two or more electrodes separated by displaceable solid conductive connectors defining a current path comprising the contact areas between the electrodes and connectors can be employed as a variable resistance. Brush contacts may be used at the contact area of such a variable resistance module.

For the latter two alternatives, if the focus is on regular switching operations and not on short current limiting actions, the speed of the resistance change is of less concern. Accordingly, the movement of a liquid metal connector or solid connector between fixed electrodes may well be driven by other drivers than electromagnetic forces, i.e. by means of a mechanical lever, a spring or a pressurized dielectric fluid.

In an embodiment, a control module computes set-points of the variable resistance module based on measured power flow parameters, e.g. the line current and the line to ground voltage. The control module controls the driver such that the resistance of the variable resistance module is changed according to the set-points.

Preferably, the set-points are determined such that the resistance of the variable resistance module is varied gradually to a maximum resistance when the power flow in the transmission line exceeds a specified power limit. Furthermore, the control module controls the driver such that the resistance of the variable resistance module is set instantaneously to the maximum resistance when a fault current limit is reached.

In an embodiment, a series reactance is connected in parallel to the variable resistance module.

In a further embodiment, multiple variable resistance modules are inserted in series into the transmission line, a series reactance module being connected in parallel to each of the multiple variable resistance modules. The variable resistance modules are controlled selectively through drivers associated with the variable resistance modules.

## BRIEF DESCRIPTION OF THE DRAWINGS

The present invention will be explained in more detail, by way of example, with reference to the drawings in which:

Fig. 1 shows a device for controlling power flow with a variable resistance module inserted into a transmission line,

Fig. 2 shows a variable resistance module configured for insertion into a transmission line,

Fig. 3 shows a variable resistance module having a series reactance connected in parallel thereto,

Fig. 4 shows a High Temperature Superconductor module with an external heater element or a magnetic field inductor coupled thereto,

Fig. 5 shows a Liquid Metal Current Limiter module with an external magnetic field inductor coupled thereto,

Fig. 6 shows a graph illustrating operating characteristics of a High Temperature Superconductor module, and

Fig. 7 shows a graph illustrating total ohmic losses and power flow variation as a function of a set point of variable resistance with series reactance, fixed series reactance, Phase Shifting Transformer and series capacitor.

## DETAILED DESCRIPTION OF PREFERRED EMBODIMENTS

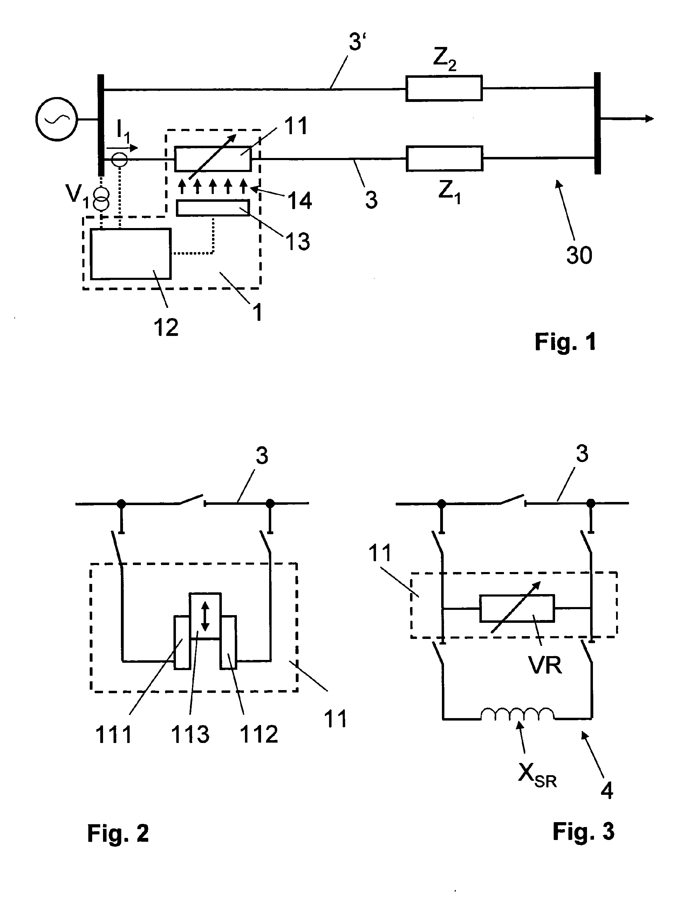

Fig. 1 shows a block diagram illustrating schematically a simplified segment of a meshed power network 30 and a device 1 for controlling power flow in the power network 30, e.g. a meshed network for distribution of electrical power. The segment comprises a transmission line 3 with impedance $Z_1$ and a transmission line 3' with impedance $Z_2$. As shown in Fig. 1, device 1 comprises a variable resistance module 11 inserted into transmission line 3 of the power network 30. Moreover, device 1 comprises a control module 12 connected to a driver 13 that is arranged external to and galvanically separated from the variable resistance module 11. To control the quantity of power flow through transmission line 3 by varying the net impedance of the transmission line 3, the control module 12 is configured to compute set points of the variable resistance module 11 based on power flow parameters, particularly based on measured values of line current $I_1$ and line to ground voltage $V_1$. In accordance with the set-points, control module 12 controls driver 13 to produce an external control effort 14, e.g. a magnetic field and/or heat, for causing the resistance of the variable resistance module 11 to change. Control module 12 is implemented as a programmed logic module, e.g. as a programmed software module controlling a processor, or as an electronic circuit, fully in hardware. In case of a short circuit, the fault current is limited by switching instantaneously the resistance of the variable resistance module 11 to its maximum value $R_{max}$.

Depending on parameters of the power network 30, the variable resistance module 11 is configured differently.

Fig. 2 illustrates a first configuration suitable for power networks with low reactance to resistance ratio X/R ($Z_1=R_{line}+iX_{line}$), i.e. with X/R<2. The variable resistance module 11 comprises, by way of example, two solid conductive electrodes 111, 112 that are conductively connected in series by means of a movable connector 113. The latter may be a liquid metal connector or, as depicted, a further solid conductor, and is moved by means of electromagnetic forces, a mechanical lever, a spring or a pressurized dielectric fluid. Depending on the position of the movable conductor 113 with respect to the electrodes 111, 112, the length of the current path through the device is increased, and/or its cross section at the connector-electrode interface decreased. Hence, in response to the external control effort, the variable resistance VR may vary gradually from 0 to $R_{max}$, in response to the line power flow exceeding a specified maximum limit of power quantity, and be switched instantaneously to $R_{max}$ for a fault current limit.

Fig. 3 illustrates a second configuration suitable for power networks with high reactance to resistance ratio X/R ratio, i.e. with X/R > 5, and stiff voltage profiles, i.e. where all bus voltages remain within ± 5% of their reference values. The variable resistance module 11 comprises a variable resistance VR connected in parallel to a series reactance $X_{SR}$. The variable resistance VR inserts and removes the reactance X from the transmission line 3 and can be operated in gradual or switching control modes. In normal operating mode, the reactance $X_{SR}$ branch is invisible to the power network 30 from an active power perspective (low losses), as it is bypassed by the variable resistance VR branch (R≈0). During overload conditions, the variable resistance VR branch provides high resistance and moves the power flow to the reactance $X_{SR}$ branch. Finally, a reduction of power flow through the transmission line 3 is achieved and power is transferred to parallel paths, e.g. transmission line 3'. The reactance $X_{SR}$ branch can be inserted and removed in a stepwise or gradual fashion using several of the modules 4 illustrated in Fig. 3. Each module 4 comprises a reactance $X_{SR}$ that can be bypassed individually by its associated variable resistance VR. It is thus possible for the central control module 2 to place (switch) selectively in series the reactance $X_{SR}$ of all modules 4, to achieve a maximum compensation level, or to remove the reactance $X_{SR}$ of all modules 4.

A third configuration (not illustrated), based on the second configuration and suitable for power networks with high reactance to resistance ratio X/R ratio and low voltage profiles, i.e. where bus voltages may deviate by more than ±10% from their reference values, comprises additionally in the reactance $X_{SR}$ branch a shunt compensation for voltage drop.

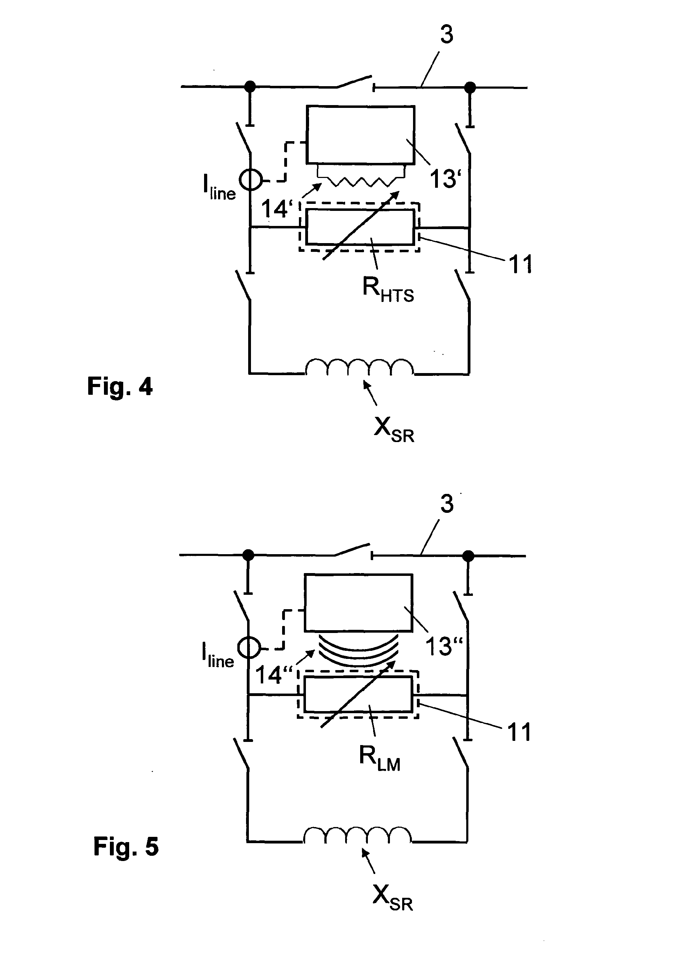

Depending on the embodiment, the variable resistance module 11 comprises a High Temperature Superconductor (HTS) module $R_{HTS}$, illustrated in Fig. 4, or a Liquid Metal Current Limiter (LM) module $R_{LM}$, illustrated in Fig. 5, as the variable resistance.

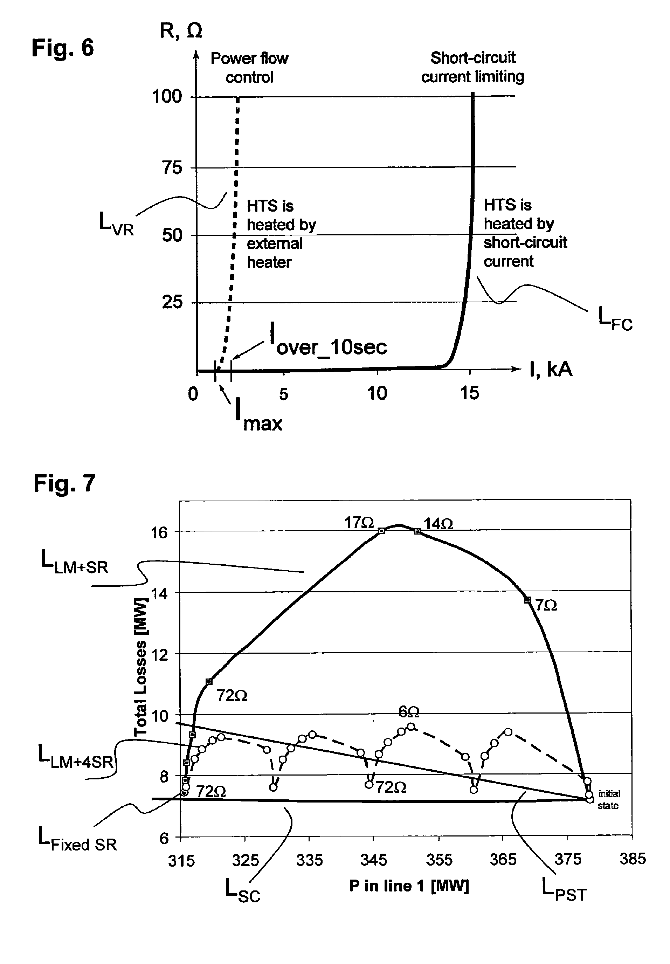

HTS fault-current limiters have a pronounced non-linear resistive characteristic depending on the line current $I_1$. The HTS module $R_{HTS}$ does not add resistance to the circuit during normal operation and, therefore, appears "invisible" in the power network 30. It reacts only on a very high short-circuit current which increases sharply the temperature of the superconductor (through resistive heating $I^2R$ caused by the fault current) and consequently its resistivity p. Thus, the HTS module $R_{HTS}$ has an operating principle that is suited excellently for short circuit current limiting applications. However, a continuous power flow control mode in the nominal current range of a transmission line is not possible, unless an external heating system 13' is used as a driver 13 (in combination with sensors) to move the operating characteristics through heat energy 14' from short circuit operating characteristics $L_{FC}$ (Fig. 6) to nominal current range operating characteristics $L_{VR}$ (Fig. 6), as illustrated in the configuration of Fig. 4. Alternatively, a magnetic field inductor can be used as a driver 13 to apply a magnetic field to the HTS module $R_{HTS}$ for suppressing superconductivity. The response time of the heater 13' may vary between a few seconds and a few minutes depending on $k$:

$$k = \frac{I_{line\_max}}{I_{line}}.$$

When moved to the nominal current range operating characteristics $L_{VR}$, the HTS module $R_{HTS}$ can be used as a static switch for a commutation of a series reactance $X_{SR}$, which will partly block power flow through the controlled transmission line 3, making the line impedance $Z_1=X_{line}+X_{SR}$. Consequently, the configuration shown in Fig. 4 limits advantageously the energy that must be absorbed by the HTS module $R_{HTS}$. However, the current limiting effect acts only at a high (short-circuit) current level, with approximately k≥3..4.

A Liquid Metal Current Limiter module $R_{LM}$ was described in J. Tepper, S. Schoft, "Fault Current Limitation by means of Liquid Metal Technology"; 23 International Conference on Electrical Contacts, Sendai, Japan, June 6-9, 2006. The Liquid Metal Current Limiter module $R_{LM}$ comprises solid metal electrodes, for connecting the module to a transmission line 3, and multiple channels filled with movable liquid metal electrodes. These electrodes are guided automatically along resistive material elements for the current limiting path by an overcurrent-dependent Lorenz force ($F_{mag}$). In normal operation, a continuous, inner conductive connection exists between the solid electrodes via the liquid metal electrodes. In the current-limiting event, the liquid metal electrodes are displaced from the connecting channels. The jump in fluid height interrupts the electrical connection of the solid electrodes via the liquid metal, resulting in a strong increase of the total electric resistance and current limiting action of the module. Subsequent to clearing or eliminating the short circuit, the connecting channels refill with liquid metal without any external action, whereupon the current-limiting module is operational again - a "self healing" property.

The operating characteristic of the Liquid Metal Current Limiter module $R_{LM}$ is the same as shown in Fig. 6 ($L_{FC}$). In order to overcome the low sensitivity of the Liquid Metal Current Limiter module $R_{LM}$ to a variation of the line current $I_1$ around the nominal value, an external magnetic field inductor 13" (in combination with sensors) is used as a driver 13 to induce a magnetic field 14" for displacing liquid metal electrodes, as illustrated in the configuration of Fig. 5. Thus, the Liquid Metal Current Limiter module $R_{LM}$ can be used for continuous power flow control or power flow blocking based on the measured line current $I_1$.

The line current $I_1$ can be moved from a resistive to an inductive branch when the line power flow is high, i.e. when it exceeds a specified limit, and vice versa. The Liquid Metal Current Limiter module $R_{LM}$ returns back to its initial state when the external magnetic field is switched-off. It has an on/off switching time less than 1 second.

Fig. 7 illustrates total ohmic losses and power flow variation for various technologies for power flow control. Line $L_{LM+SR}$ is representative of using a Liquid Metal Current Limiter module $R_{LM}$ as the variable resistance VR and connecting a series reactance $X_{SR}$ in parallel thereto. Lines $L_{PST}$, $L_{SC}$ and $L_{Fixed\ SR}$ are representative of using a Phase Shifting Transformer (PST), a Series Capacitor (SC) or a fixed series reactance (SR), respectively. As can be seen, at the moment when the series reactance $X_{SR}$ is fully commutated by the Liquid Metal Current Limiter module $R_{LM}$, the final total losses have practically the same value as PST, SC or the fixed SR of the same rating. Line $L_{LM+4SR}$ is representative of using four modules 4 of Liquid Metal Current Limiter modules $R_{LM}$, each having a series reactance $X_{SR}$ connected in parallel thereto. As can be seen, while the four modules 4 provide the same level of power flow deviation (consequent switching) as one large series reactance $X_{SR}$, the total losses are very low. Four modules 4 of 72Ω show the same performance as one module of 720Ω for a commutation of one large series reactance $X_{SR}$. In addition, the four modules 4 make it possible to provide a continuous power flow regulation in the whole range, from 380 to 315 MW, without a big impact on power losses.

The proposed device 1 can be used for power flow control and fault current limitation as a stand alone device in power distribution networks with low reactance to resistance ratio X/R; as a switch (step wise control) connected in parallel to a large series reactive element (large resistance is required) in power transmission and distribution networks with high reactance to resistance ratio X/R and stiff voltage profiles; as a regulator (gradual control) connected in a parallel to a small reactive element (small resistance is required) in transmission and distribution networks with stiff voltage profiles, several regulator/reactance modules being connected in series; and in networks with low voltage profiles, configured as in the two previous cases with additional shunt compensation.

**Claims**

1.  A device (1) for controlling power flow in a transmission line (3) of meshed power network (30), comprising:

    at least one variable resistance module (11) configured for insertion into the transmission line (3); and
    a driver (13) configured to produce an external control effort (14, 14', 14") and arranged to apply the external control effort (14, 14', 14") to the variable resistance module (11) for causing a change in resistance of the variable resistance module (11).

2.  The device (1) of claim 1, further comprising a series reactance ($X_{SR}$) connected in parallel to the variable resistance module (11).

3.  The device (1) of claim 1, wherein the variable resistance module (11) comprises a High Temperature Superconductor module ($R_{HTS}$), and wherein the driver (13) comprises one of a heater (13') and a magnetic field inductor for causing a change of resistance of the High Temperature Superconductor module ($R_{HTS}$) by a magnetic field or heat (14'), respectively.

4.  The device (1) of claim 1, wherein the variable resistance module (11) comprises a Liquid Metal Current Limiter module ($R_{LM}$), and wherein the driver (13) comprises a magnetic field inductor (13") for causing a change of resistance of the Liquid Metal Current Limiter module ($R_{LM}$) by a magnetic field (14").

5.  The device (1) of claim 1, wherein the variable resistance module (11) comprises two solid conductive electrodes (111, 112) and a movable connector (113) defining a current path with a variable resistance depending on a position of the movable connector (113).

**6.** A method of controlling power flow in meshed power network (30), comprising:

> inserting at least one variable resistance module (11) into a transmission line (3) of the power network (30);
> producing in a driver (13) an external control effort (14, 14', 14"); and
> applying the external control effort (14, 14', 14") to the variable resistance module (11) for causing a change of resistance of the variable resistance module (11).

**7.** The method of claim 6, further comprising computing in a control module (12) set-points of the variable resistance module (11) based on measured power flow parameters ($I_1$, $V_1$), and controlling the driver (13) such that the resistance of the variable resistance module (11) is changed according to the set-points.

**8.** The method of claim 7, wherein the set-points are determined such that the resistance of the variable resistance module (11) is varied gradually to a maximum resistance when the power flow in the transmission line (3) exceeds a specified power limit, and wherein the driver (13) is controlled such that the resistance of the variable resistance module (11) is set instantaneously to the maximum resistance when a fault current limit is reached.

**9.** The method of claim 6, further comprising connecting a series reactance ($X_{SR}$) in parallel to the variable resistance module (11).

**10.** The method of claim 6, wherein multiple variable resistance modules (11) are inserted into the transmission line (3); and wherein a series reactance ($X_{SR}$) module is connected in parallel to each of the multiple variable resistance modules (11), the method comprising controlling selectively the variable resistance modules (11) through drivers (13) associated with the variable resistance modules (11).

Fig. 1

Fig. 2

Fig. 3

**Fig. 4**

**Fig. 5**

**Fig. 6**

**Fig. 7**

**European Patent Office**

**EUROPEAN SEARCH REPORT**

Application Number

EP 06 40 5501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 39 709 A1 (SIEMENS AG [DE]) 22 February 2001 (2001-02-22) * abstract * * figure 1 * * column 1, line 1 - line 28 * * column 2, line 4 - line 58 * * claims 1,5,6,9 * | 1,6 | INV. H02J3/18 |
| Y | * the whole document * | 2,9 | |
| A | * claims 10-12 * | 5,7,8 | |
| Y | WO 87/04538 A (VITHAYATHIL JOHN J) 30 July 1987 (1987-07-30) * abstract * * figure 2 * * page 4, paragraph 1-3 * * page 5, paragraph 7 * * page 6, paragraph 1 * * page 10, paragraph 3 * * claims 1,3,4 * | 2,9 | |
| A | * the whole document * | 10 | |
| A | MARTEN SJÖSTRÖMSJOSTROM ET AL: "Technical and Economical Impacts on a Power System by Introducing an HTS FCL" IEEE TRANSACTIONS ON APPLIED SUPERCONDUCTIVITY, IEEE SERVICE CENTER, LOS ALAMITOS, CA, US, vol. 11, no. 1, March 2001 (2001-03), pages 2042-2045, XP011090741 ISSN: 1051-8223 * abstract * * page 2042, paragraph I * * page 2042, paragraph IIB * * page 2043, paragraph IID * | 1,3 | TECHNICAL FIELDS SEARCHED (IPC) H02J |

-/--

The present search report has been drawn up for all claims

| Place of search | Date of completion of the search | Examiner |
|---|---|---|
| The Hague | 14 May 2007 | Koutsorodis, Dafni |

EPO FORM 1503 03.82 (P04C01)

**European Patent Office**

**EUROPEAN SEARCH REPORT**

Application Number

EP 06 40 5501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANIL R DUGGAL: "An Upper Limit for High Power Switching with a Polymer Current Limiter Device" IEEE TRANSACTIONS ON COMPONENTS AND PACKAGING TECHNOLOGIES, IEEE SERVICE CENTER, PISCATAWAY, NJ, US, vol. 23, no. 3, September 2000 (2000-09), XP011008150 ISSN: 1521-3331 * abstract * * page 490, column 1, line 1 - line 20 * * page 490, column 2, line 1 - line 15 * * page 491, column 1, line 1 - line 50 * * figure 2 * ----- | 1,4 | |
| | | | **TECHNICAL FIELDS SEARCHED (IPC)** |

The present search report has been drawn up for all claims

| Place of search | Date of completion of the search | Examiner |
|---|---|---|
| The Hague | 14 May 2007 | Koutsorodis, Dafni |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 06 40 5501

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2007

| Patent document cited in search report | | Publication date | Patent family member(s) | | Publication date |
|---|---|---|---|---|---|
| DE 19939709 | A1 | 22-02-2001 | NONE | | |
| WO 8704538 | A | 30-07-1987 | AU | 7026987 A | 14-08-1987 |
| | | | CA | 1312649 C | 12-01-1993 |
| | | | DE | 3787335 D1 | 14-10-1993 |
| | | | DE | 3787335 T2 | 05-01-1994 |
| | | | EP | 0258314 A1 | 09-03-1988 |
| | | | FI | 874135 A | 22-09-1987 |
| | | | IN | 166749 A1 | 14-07-1990 |
| | | | NO | 873937 A | 23-11-1987 |
| | | | TR | 23181 A | 06-06-1989 |
| | | | US | 5032738 A | 16-07-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. TEPPER ; S. SCHOFT.** Fault Current Limitation by means of Liquid Metal Technology. *23 International Conference on Electrical Contacts,* 06 June 2006